# NEUE EUROPÄISCHE PATENTSCHRIFT

(11) **EP 2 287 489 B2**
(45) Veröffentlichungstag und Bekanntmachung des Hinweises auf die Entscheidung über den Einspruch: **12.08.2015**
(45) Hinweis auf die Patenterteilung: 14.03.2012
(21) Anmeldenummer: 10172779.0
(22) Anmeldetag: 13.08.2010
(51) Int. Cl.: F16D 55/22, F16D 66/00, F16D 66/02

(54) **Vorrichtung zum Befestigen eines elektrischen Bauteils einer Fahrzeugbremse**
Device for attaching an electric component of a vehicle brake
Dispositif de fixation d'un composant électrique d'un frein de véhicule

(30) Priorität: 21.08.2009 DE 102009038493
(43) Veröffentlichungstag der Anmeldung: 23.02.2011
(73) Patentinhaber: BPW Bergische Achsen KG, 51674 Wiehl (DE)
(72) Erfinder: Klaas, Thomas, 51580, Reichshof (DE); Braun, Harry, 51545, Waldbröl (DE)
(74) Vertreter: Bungartz Christophersen Partnerschaft mbB Patentanwälte

(56) Entgegenhaltungen:
- EP-A1- 0 602 866
- EP-A1- 0 602 866
- EP-A1- 0 634 586
- EP-A1- 0 634 586
- EP-A2- 1 158 199
- EP-A2- 1 158 199
- WO-A1-92/18787
- WO-A1-92/18787
- DE-T2- 69 407 500

## Beschreibung

Die Erfindung betrifft eine Vorrichtung zum Befestigen eines elektrischen Bauteils einer Fahrzeugbremse gegenüber einer Fahrzeugachse, vorzugsweise des Signalkabels eines ABS-Sensors, mit einem das elektrische Bauteil positionierenden Halter, der mit mindestens einer Befestigungsfläche zur Abstützung an der Fahrzeugachse oder einem achsfesten Element versehen ist.

Elektrische Bauteile im Bereich von Fahrzeugbremsen und insbesondere ABS-Signalaufnehmer einschließlich ihrer Verkabelung sind während des Fahrbetriebs den Erschütterungen und Schwingungen der Fahrzeugachse ausgesetzt, weshalb hohe Anforderungen an einen festen, sicheren Sitz derartiger Bauteile gestellt werden. Eine feste und sichere Positionierung ist dann besonders wichtig, wenn sich die elektrischen Bauteile in direkter Nähe zu solchen Bremsenteilen des Fahrzeugs befinden, die im Fahrbetrieb hohe Temperaturen annehmen. Wenn in solchen Situationen und ausgelöst durch Erschütterungen oder Schwingungen elektrische Bauteile ihre Position verändern und zu nah an heiße Bremsenteile gelangen, kann es zu Schädigungen an den Bauteilen bis hin zum kompletten Ausfall kommen. Diese Gefahr besteht nicht nur bei unmittelbarem Wärmekontakt, sondern bereits bei zu großer Annäherung, da moderne Fahrzeugbremsen und dort vor allem die Bremsscheiben wegen der hohen Betriebstemperaturen einen großen Anteil Strahlungshitze entwickeln.

Aus der EP 0 634 586 B1 ist eine Halterung für einen in eine Bremsbacke einsteckbaren Verschleißsensor bekannt, an der zusätzlich ein Hitzeschild angeformt ist, damit der Sensor der Betriebstemperatur der Bremsbacke widersteht.

Der Erfindung liegt die **Aufgabe** zugrunde, eine Vorrichtung zum Befestigen eines elektrischen Bauteils einer Fahrzeugbremse gegenüber einer Fahrzeugachse zu schaffen, die sich für den Einsatz im Nahbereich moderner, mit hohen Betriebstemperaturen und damit Strahlungsanteilen arbeitender Fahrzeugbremsen eignet.

Zur **Lösung** dieser Aufgabe wird eine Vorrichtung mit den Merkmalen des Anspruch 1 vorgeschlagen.

Der Vorteil dieser Lösung besteht in einer sicheren Befestigung des elektrischen Bauteils in Verbindung mit einer Reduzierung des im Bereich der Fahrzeugbremse auf das elektrische Bauteil auftreffenden Strahlungswärmeanteils. Bei Scheibenbremsen ist die um die Fahrzeugachse rotierende Bremsscheibe die größte Strahlungsquelle, weshalb bei der Positionierung des elektrischen Bauteils in Bezug auf die Fahrzeugachse die Anordnung der Hitzeabschirmung vor allem zu der Bremsscheibe hin vorteilhaft ist.

In den Unteransprüchen sind vorteilhafte Ausgestaltungen der erfindungsgemäßen Vorrichtung angegeben.

Weitere Vorteile sowie Einzelheiten ergeben sich aus der nachfolgenden Beschreibung eines Ausführungsbeispieles, wobei auf die Zeichnungen Bezug genommen wird. Darin zeigen:
Fig. 1 in perspektivischer Darstellung eine erste Ausführungsform einer mittels eines Bremsträgers auf einer Fahrzeugachse angeordneten Scheibenbremse;
Fig. 2 eine zweite Ausführungsform der Scheibenbremse, bei der ein die Bremsscheibe nach innen hin schützendes Abdeckblech fehlt;
Fig. 3 in perspektivischer Einzeldarstellung den Endbereich einer Fahrzeugachse einschließlich Achsschenkel, an der Fahrzeugachse befestigtem Bremsträger sowie an der Fahrzeugachse befestigtem Flansch, an dem eine erfindungsgemäße Vorrichtung montiert ist;
Fig. 4 die Gegenstände nach Fig. 3 aus einer anderen Perspektive;
Fig. 5 in perspektivischer Darstellung den achsfesten Flansch einschließlich der daran angeklemmten Vorrichtung;
Fig. 6 die Gegenstände nach Fig. 5 in getrenntem Zustand und
Fig. 7 die Vorrichtung in anderer perspektivischer Darstellung.

An einer Fahrzeugachse 1, von der hier der äußere, radnahe Achsabschnitt dargestellt ist, ist eine Scheibenbremse 2 angeordnet, hier eine Scheibenbremse vom Schwimmsattel-Bautyp. Zur Lagerung der Scheibenbremse ist auf der hier als quadratisches Rohr gestalteten Fahrzeugachse 1 ein Bremsträger 3 durch Verschweißen mit der Fahrzeugachse 1 befestigt. An dem Bremsträger 3 befinden sich Gleitlagerungen für die schwimmende Lagerung des Bremssattels 4 der Scheibenbremse.

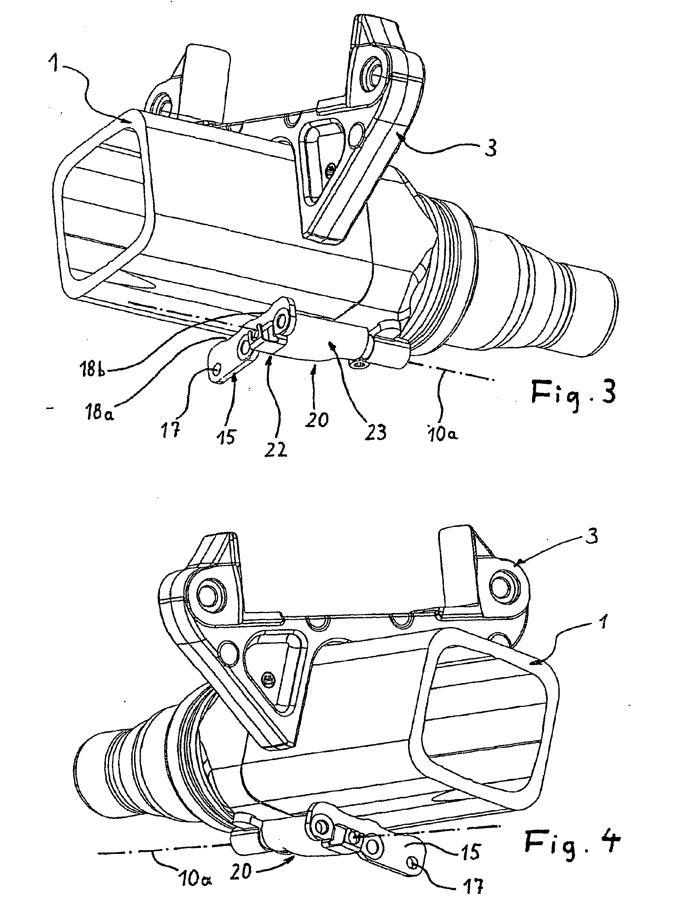

Am fahrzeugaußen gelegenen Ende ist die Fahrzeugachse 1 mit einem Achsschenkel 1 a (Fig. 3) versehen, auf dem über Wälzlager eine Radnabe 7 drehbar gelagert ist. Außen an einem Flansch der Radnabe 7 befinden sich Bolzen 8 zur Befestigung des hier nicht dargestellten Fahrzeugrades. Die Bolzen 8 übernehmen ferner die Befestigung der Bremsscheibe 5 der Scheibenbremse. Hierzu ist die Bremsscheibe 5 mit einem Flansch versehen, der von innen her gegen einen korrespondierenden Flansch der Radnabe 7 befestigt ist, so dass sich die Bremsscheibe 5 gemeinsam mit der Radnabe 7 dreht.

Zwischen der Fahrzeugachse 1 und der diese umgebenden Bremsscheibe 5, die hier als innenbelüftete Bremsscheibe gestaltet ist, befindet sich ein radialer Freiraum 6. Dieser bietet ausreichend Platz für die Anordnung oder Hindurchführung eines ABS-Sensors, also eines z.B. induktiv arbeitenden Aufnehmers für den Drehwinkel bzw. die Drehgeschwindigkeit der sich drehenden Fahrzeugteile, also der Bremsscheibe 5 oder alternativ der Radnabe 7. Die Signale des ABS-Sensors gelangen über ein elektrisches Kabel zu einem ABS-Steuergerät oder einem anderen Steuergerät der Fahrzeug- Fahrwerks- oder Bremsenregelung. Der ABS-Sensor ist an der Achse oder an einem achsfesten Element befestigt, wobei er sich innerhalb der Bremsscheibe 5 oder auch innerhalb der Radnabe 7 befindet. Vom ABS-Sensor führt ein biegsames elektrisches Kabel 10, welches an seinem anderen Ende mit einem Stecker 11 versehen ist, zu dem jeweiligen Steuergerät.

Wegen der im Fahrbetrieb von der Bremsscheibe 5 ausgehenden Hitze muss die Hindurchführung des Sensorkabels 10 durch den Freiraum 6 zwischen Fahrzeugachse 1 und Innenrand der Bremsscheibe 5 mit großer Sorgfalt erfolgen. Insbesondere ist das Kabel 10 so gegenüber der Fahrzeugachse 1 zu positionieren, dass selbst im Fall von Erschütterungen oder Schwingungen der Fahrzeugachse eine zu große Annäherung an die heiße Bremsscheibe 5 vermieden wird. Eine solche sichere Positionierung in Verbindung mit einem thermischen Schutz wird durch die im Folgenden näher erläuterte Vorrichtung 20 erzielt.

Gemäß den Fign. 3 und 4 ist an der dem Bremsträger 3 abgewandten Seite der Fahrzeugachse 1 ein aus einem flachen Blech bestehender Flansch 15 befestigt. Der Flansch 15 ist, ebenso wie der Bremsträger 3, durch Verschweißen an der Fahrzeugachse befestigt, wobei er sich quer zur Längsrichtung der Fahrzeugachse 1 erstreckt und er im Wesentlichen rechtwinklig von der Fahrzeugachse absteht.

Der Flansch 15 ist an seinem der Fahrzeugachse zugewandten Rand mit Ausnehmungen 18a, 18b versehen. Die eine Ausnehmung 18b bietet ausreichend Platz für den Durchtritt der Schweißnaht des aus zwei Profilhälften längsverschweißten Achsrohrs. Die andere Ausnehmung 18a wird hier nicht benötigt, sondern nur bei Verwendung des gleichen Flanschs 15 an einem Achsaggregat mit anderen Anschlussmaßen.

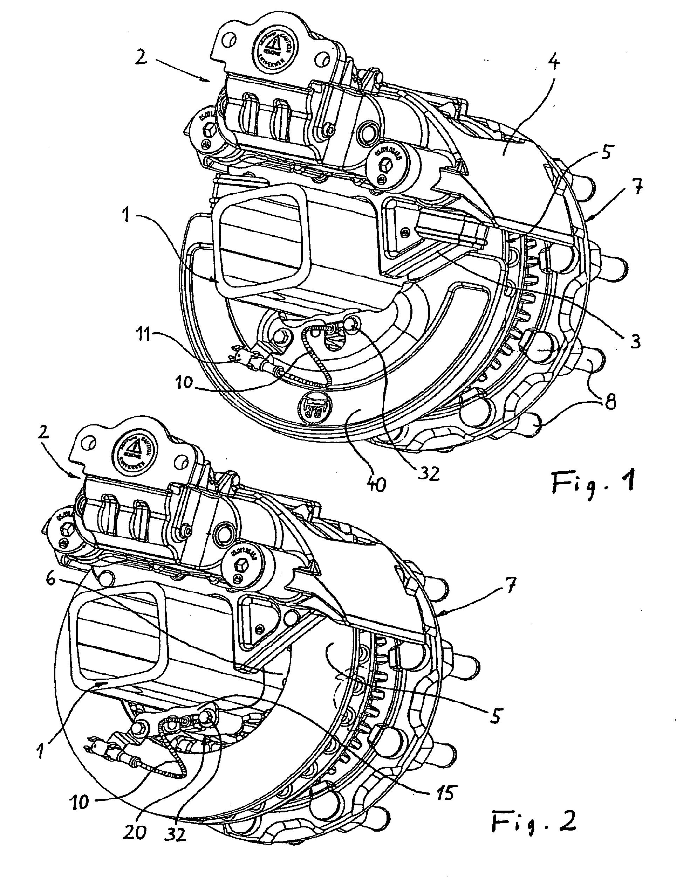

Der Flansch 15 ist an seinem der Fahrzeugachse abgewandten Rand mit einer den Durchtritt eines elektrischen Bauteils 10, hier des Sensorkabels, ermöglichenden Ausnehmung 14 versehen. Unmittelbar neben der Ausnehmung 14 befindet sich eine erste Bohrung 16, die sich parallel zur Fahrzeugachse erstreckt. Ferner ist der Flansch 15 auf der anderen Seite der Ausnehmung 14 mit einer weiteren Bohrung 17 versehen. Auch diese verläuft parallel zur Fahrzeugachse 1, weist jedoch einen größeren Abstand zur Ausnehmung 14 auf, als die erste Bohrung 16 und dient unter anderem der Befestigung eines nur bei der Ausführungsform nach Fig. 1 vorhandenen Abdeckblechs 40. Zugleich oder auch allein kann dort ein Halter für den Stecker 11 befestigt werden.

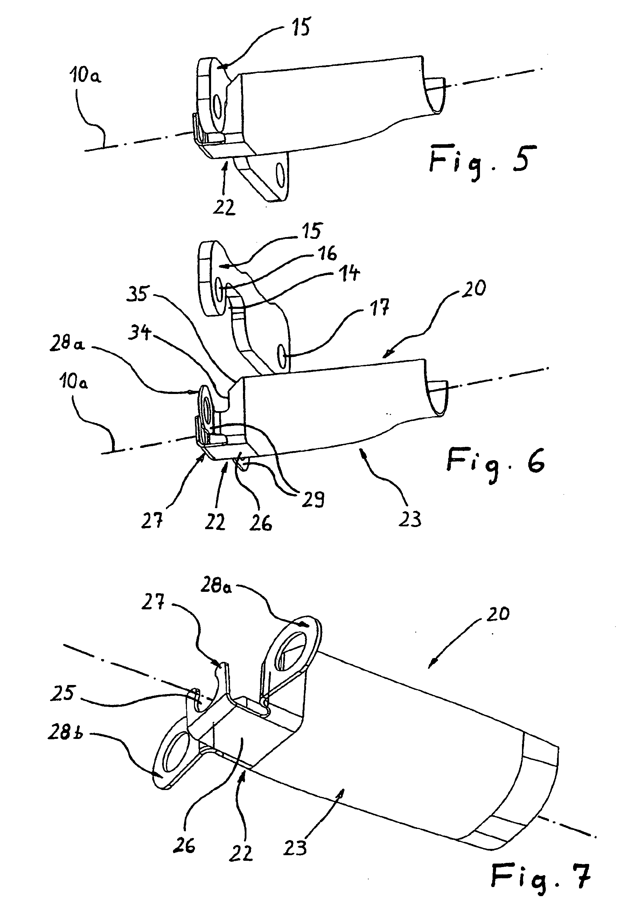

Die Befestigung des elektrischen Bauteils 10 sowie einer Hitzeabschirmung für das elektrische Bauteil 10 an dem Flansch 15 erfolgt durch die gemäß den Fign. 3, 4 und 5 auf den Flansch 15 aufgeklemmte Vorrichtung 20. Diese besteht aus einem Halter 22, sowie einer in Verlängerung zu dem Halter angeordneten Hitzeabschirmung 23. Die Vorrichtung 20, also einschließlich der daran realisierten Funktionen des Halters 22 und der Hitzeabschirmung 23, ist einstückig und ist aus einem durch vielfaches Umformen und Abkanten geformten Streifen aus Stahlblech hergestellt. Zur Veranschaulichung der Lage des elektrischen Bauteils 10, hier also des ABS-Sensorkabels, ist in den Fign. 3 bis 6 jeweils nur die Mittellinie 10a des Sensorkabels eingezeichnet.

Zur Befestigung des elektrischen Bauteils an dem Halter 22 weist dieser einen Halteabschnitt 27 mit einer Öffnung 25 auf, die in Gestalt einer Schlüssellochausnehmung das elektrische Bauteil um mehr als 180°, aber deutlich weniger als 360° umschließt. Das elektrische Bauteil lässt sich durch geringfügiges Zusammendrücken in die Öffnung 25 hineinklemmen.

Der Halteabschnitt 27 ist ausschließlich über einen schmalen Steg 26 mit den übrigen Teilen des Halters 22 und mit der in Verlängerung zu dem Steg 26 angeordneten Hitzeabschirmung 23 verbunden. Durch den geringen Querschnitt des Stegs 26 kann kein zu großer Wärmestrom von der Hitzeabschirmung 23 zu dem Halteabschnitt 27 und dem dort eingeklemmten elektrischen Bauteil 10 gelangen. Ein nur geringer Wärmefluss zu dem Halteabschnitt 27 wird auch dadurch erreicht, dass sich der Halteabschnitt 27 auf der einen, hingegen die Hitzeabschirmung 23 auf der anderen Seite der durch die Befestigungsfläche 29 definierten Ebene befindet.

Bestandteile des Halters 22 der Vorrichtung sind außerdem zwei rechtwinklig nach außen abstehende Laschen 28a, 28b. Die Basis der Laschen 28a, 28b befindet sich in Verlängerung zu der Hitzeabschirmung 23. Von dieser Basis aus knicken die Laschen rechtwinklig nach außen ab. Die eine, nämlich die der Hitzeabschirmung 23 zugewandte Flachseite der Laschen 28a, 28b dient als Befestigungsfläche 29, mit der sich der Halter 22 gegen den achsfesten Flansch 15 abstützt, wenn der Halter 22 auf den Flansch 15 der Achse aufgesteckt ist. Jede der beiden Laschen 28a, 28b ist mit einer Öffnung versehen. Eine dieser beiden Öffnungen befindet sich, wenn der Halter 22 auf den Flansch 15 aufgeklemmt ist, in Fluchtung zu der ersten Bohrung 16 des Flanschs 15, so dass eine Schraube 32, vorzugsweise eine selbstfurchende Schraube, hindurchsteckbar ist und der Halter 22 dann nicht mehr von dem Flansch 15 lösbar ist.

Das Klemmen der Vorrichtung 20 auf dem flachen Flansch 15 ist nur möglich, wenn den Befestigungsflächen 29 der beiden Laschen Gegenklemmflächen gegenüberliegen, die sich von der anderen Seite, also der Seite der Hitzeabschirmung 23 her, gegen den Flansch 15 abstützen. Als Gegenklemmflächen dienen Befestigungsränder 34, die zugleich die Ränder der Hitzeabschirmung 23 sind. Die Ränder 34 laufen in Schrägen 35 aus, um das Aufsetzen des Halters 22 auf den Flansch 15 zu vereinfachen.

Die Hitzeabschirmung 23 hat die Gestalt einer zur Bremsscheibe 5 hin und damit achsabgewandt geschlossenen, hingegen zur Fahrzeugachse 1 hin offenen Rinne. Die Rinne ist U-förmig und erstreckt sich längs der Mittellinie 10a und ist von solcher Weite, dass eine Berührung mit dem innerhalb angeordneten elektrischen Bauteil 10 möglichst vermieden wird. Die Hitzeabschirmung 23 ist ausreichend lang, um die durch die Strahlungshitze der Bremse besonders belasteten Längsabschnitte des elektrischen Bauteils und insbesondere des ABS-Sensors einschließlich seines Kabels zu schützen.

Bei der ersten Ausführungsform nach Fig. 1 dient die Schraube 32 zugleich einer weiteren Befestigung, d.h. zusätzlich zu einer Befestigung an anderen Befestigungsorten, eines Abdeckblechs 40 an dem Halter 15. Das Abdeckblech 40 ist in etwa halbkreis- oder sichelförmig und erstreckt sich parallel zu der Bremsscheibe 5. Es dient bei dieser Ausführungsform dazu, die Bremsenteile nach fahrzeuginnen abzudecken, und so vor Steinschlag zu schützen. An seinem Innenrand ist das Abdeckblech 40 mit einer Ausnehmung versehen, die sich mit der im Flansch 15 vorhandenen Ausnehmung 14 überdeckt und so einen achsparallelen Durchtritt des elektrischen Bauteils 10 ermöglicht. Bei der Montage des Abdeckblechs 40 wirkt sich die oben beschriebene Klemmung der Vorrichtung 20 positiv aus, da nicht zwei Bauteile gleichzeitig in die richtige Lage zu bringen und dort zu halten sind.

Dass insgesamt zwei Laschen 28a, 28b mit jeweils einer Öffnung vorhanden sind, ermöglicht das Aufsetzen ein- und desselben Halters 22 wahlweise auf den Flansch 15 der einen oder der anderen Fahrzeugseite.

### Bezugszeichenliste

- 1: Fahrzeuachse
- 1a: Achsschenkel
- 2: Scheibenbremse
- 3: Bremsträger
- 4: Bremssattel
- 5: Bremsscheibe
- 6: Freiraum
- 7: Radnabe
- 8: Bolzen
- 10: elektrisches Bauteil
- 10a: Mittellinie des elektrischen Bauteils
- 11: Stecker
- 14: Ausnehmung
- 15: Flansch
- 16: Bohrung
- 17: Bohrung
- 18a: Ausnehmung
- 18b: Ausnehmung
- 20: Vorrichtung
- 22: Halter
- 23: Hitzeabschirmung
- 25: Öffnung
- 26: Steg
- 27: Halteabschnitt
- 28a: Lasche
- 28b: Lasche
- 29: Befestigungsfläche
- 32: Schraube
- 34: Befestigungsrand
- 35: Schräge
- 40: Abdeckblech

## Patentansprüche

1. Vorrichtung zum Befestigen eines elektrischen Bauteils (10) einer Fahrzeugbremse gegenüber einer Fahrzeugachse, vorzugsweise des Signalkabels eines ABS-Sensors, mit einem das elektrische Bauteil (10) positionierenden Halter (22), der mit mindestens einer Befestigungsfläche (29) zur Abstützung an der Fahrzeugachse oder einem achsfesten Element versehen ist, wobei eine an dem Halter (22) einstückig ausgebildete Hitzeabschirmung (23) sich längs des elektrischen Bauteils (10) zumindest auf dessen achsabgewandter Seite erstreckt, und das elektrische Bauteil (10) in einem an dem Halter (22) einstückig ausgebildeten, das elektrische Bauteil (10) auf einem Teilumfang umgebenden und dadurch an dem Halter (22) festlegenden Halteabschnitt (27) geklemmt ist.

2. Vorrichtung nach Anspruch 1, **dadurch gekennzeichnet, dass** die Hitzeabschirmung (23) als eine zu der Fahrzeugachse hin offene Rinne gestaltet ist.

3. Vorrichtung nach Anspruch 2, **dadurch gekennzeichnet, dass** die Hitzeabschirmung (23) einen U-förmigen Querschnitt aufweist.

4. Vorrichtung nach Anspruch 1 oder 2, **dadurch gekennzeichnet, dass** der Halter (22) in Verlängerung der Hitzeabschirmung (23) mit mindestens einer nach außen abgewinkelten Lasche (28a, 28b) versehen ist, deren eine Flachseite die Befestigungsfläche (29) bildet.

5. Vorrichtung nach Anspruch 4, **dadurch gekennzeichnet, dass** sich die Befestigungsfläche (29) an der der Hitzeabschirmung (23) zugewandten Flachseite der Lasche (28a, 28b) befindet.

6. Vorrichtung nach Anspruch 4 oder 5, **dadurch gekennzeichnet, dass** die Lasche (28a, 28b) mit einer Öffnung für eine Befestigungsschraube (32) versehen ist.

7. Vorrichtung nach einem der Ansprüche 4 bis 6, **dadurch gekennzeichnet, dass** der Halter (22) auf jeder Seite des elektrischen Bauteils (10) mit einer Lasche (28a, 28b) versehen ist.

8. Vorrichtung nach einem der vorangehenden Ansprüche, **dadurch gekennzeichnet, dass** der Halter (22) zur zusätzlichen Abstützung an der Achse bzw. dem achsfesten Element mit einem der Befestigungsfläche (29) gegenüberliegend angeordneten Befestigungsrand (34) versehen ist.

9. Vorrichtung nach Anspruch 8, **dadurch gekennzeichnet, dass** der Befestigungsrand (34) der Rand der Hitzeabschirmung (23) ist.

10. Vorrichtung nach Anspruch 1, **dadurch gekennzeichnet, dass** der Halteabschnitt (27) auf der einen, und die Hitzeabschirmung (23) auf der anderen Seite der durch die Befestigungsfläche (29) definierten Ebene angeordnet ist.

11. Vorrichtung nach Anspruch 10, **dadurch gekennzeichnet, dass** die einzige Materialverbindung zwischen dem Halteabschnitt (27) und der Hitzeabschirmung (23) ein Steg (26) ist, dessen Breite geringer als die Breite der Hitzeabschirmung (23) ist.

## Claims

1. An apparatus for fastening an electrical component (10) of a vehicle brake with respect to a vehicle axle, preferably the signal cable of an ABS sensor, with a holding means (22) which positions the electrical component (10) and which is provided with at least one fastening face (29) for support on the vehicle axle or an element fixed to the axle, wherein a heat shield (23) formed in one piece on the holding means (22) extends along the electrical component (10) at least on the side thereof facing away from the axle, and wherein the electrical component (10) is clamped in a holding portion (27), which holding portion (27) is formed in one piece on the holding means (22) and surrounds the electrical component (10) on at least part of the periphery and, as a result, fixes it on the holding means (22).

2. An apparatus according to claim 1, **characterized in that** the heat shield (23) is designed in the form of a channel open towards the vehicle axle.

3. An apparatus according to claim 2, **characterized in that** the heat shield (23) has a U-shaped cross-section.

4. An apparatus according to claim 1 or 2, **characterized in that** the holding means (22) is provided in a continuation of the heat shield (23) with at least one fastening plate (28a, 28b) which is angled towards the outside and one flat side of which forms the fastening face (29).

5. An apparatus according to claim 4, **characterized in that** the fastening face (29) is present on the flat side of the fastening plate (28a, 28b) facing the heat shield (23).

6. An apparatus according to claim 4 or 5, **characterized in that** the fastening plate (28a, 28b) is provided with an opening for a fastening screw (32).

7. An apparatus according to any one of claims 4 to 6, **characterized in that** the holding means (22) is provided with a fastening plate (28a, 28b) on each side of the electrical component (10).

8. An apparatus according to any one of the preceding claims, **characterized in that** for additional support on the axle or the element fixed to the axle the holding means (22) is provided with a fastening edge (34) arranged opposite the fastening face (29).

9. An apparatus according to claim 8, **characterized in that** the fastening edge (34) is the edge of the heat shield (23).

10. An apparatus according to claim 1, **characterized in that** the holding portion (27) is arranged on one side and the heat shield (23) is arranged on the other side of the plane defined by the fastening face (29).

11. An apparatus according to claim 10, **characterized in that** the single material join between the holding portion (27) and the heat shield (23) is a web (26), the width of which is smaller than the width of the heat shield (23).

## Revendications

1. Dispositif pour fixer un composant (10) électrique d'un frein de véhicule par rapport à un essieu de véhicule, de préférence du câble de signalisation d'un capteur ABS, comprenant un support (22) positionnant le composant (10) électrique, qui est muni d'au moins une surface de fixation (29) pour l'appui sur l'essieu de véhicule ou un élément solidaire de l'essieu, une protection de chaleur (23) conçue d'une seule pièce sur le support (22) s'étendant le long du composant (10) électrique au moins sur son côté opposé à l'essieu, et le composant (10) électrique étant serré dans une partie de retenue (27) conçue d'une seule pièce sur le support (22), entourant le composant (10) électrique sur un pourtour partiel et le fixant ainsi sur le support (22).

2. Dispositif selon la revendication 1, **caractérisé en ce que** l'écran de chaleur (23) est conçu sous forme d'une goulotte ouverte en direction de l'essieu du véhicule.

3. Dispositif selon la revendication 2, **caractérisé en ce que** l'écran de chaleur (23) présente une section en U.

4. Dispositif selon la revendication 1 ou 2, **caractérisé en ce que** le support (22) est doté dans le prolongement de l'écran de chaleur (23) d'au moins une patte (28a, 28b) coudée vers l'extérieur, dont un côté plat forme la surface de fixation (29).

5. Dispositif selon la revendication 4, **caractérisé en ce que** la surface de fixation (29) se trouve sur le côté plat, tourné vers l'écran de chaleur (23) de la patte (28a, 28b).

6. Dispositif selon la revendication 4 ou 5, **caractérisé en ce que** la patte (28a, 28b) est dotée d'une ouverture pour une vis de fixation (32).

7. Dispositif selon l'une des revendications 4 à 6, **caractérisé en ce que** le support (22) est doté d'une patte (28a, 28b) sur chaque côté du composant (10) électrique.

8. Dispositif selon l'une des revendications précédentes, **caractérisé en ce que** le support (22) est doté d'un bord de fixation (34) disposé en face de la surface de fixation (29) pour l'appui supplémentaire sur l'essieu ou l'élément solidaire de l'essieu.

9. Dispositif selon la revendication 8, **caractérisé en ce que** le bord de fixation (34) est le bord de l'écran de chaleur (23).

10. Dispositif selon la revendication 1, **caractérisé en ce que** la partie de retenue (27) et l'écran de chaleur (23) sont disposés respectivement sur l'un et l'autre côté du plan défini par la surface de fixation (29).

11. Dispositif selon la revendication 10, **caractérisé en ce que** l'unique liaison de matériau entre la partie de retenue (27) et l'écran de chaleur (23) est une entretoise (26) dont la largeur est plus faible que la largeur de l'écran de chaleur (23).
